# EUROPEAN PATENT APPLICATION

(11) **EP 3 700 160 A1**
(43) Date of publication of application: **26.08.2020**
(21) Application number: 19159185.8
(22) Date of filing: 25.02.2019
(51) Int. Cl.: H04L 29/06, G05B 19/418, H04L 9/32

(54) **CRYPTOGRAPHIC CERTIFICATES FOR AN INDUSTRIAL CONTROLLER**

(71) Applicant: CODESYS Holding GmbH, 87439 Kempten (DE)
(72) Inventor: Adrian, Scholl, 87509 Immenstadt im Allgäu (DE)
(74) Representative: Kretschmann, Dennis

(57) **Abstract**

An industrial controller unit comprises an interface for a cryptographic data exchange via a network, and is adapted to obtain at least one configuration parameter pertaining to the industrial controller unit and/or the interface. The industrial controller unit is further adapted to generate a cryptographic certificate request based on the at least one configuration parameter, and to obtain a cryptographic certificate for the cryptographic data exchange based on the cryptographic certificate request.

## Description

### Technical Field

The present disclosure relates to the field of industrial control, and in particular to techniques for obtaining a cryptographic certificate for an industrial controller unit, such as to allow the industrial controller unit to share industrial control data with external entities without compromising the security of the industrial control data and/or the industrial controller unit.

### Background

Industrial controller units are ubiquitous in modern manufacturing and process control, and are often employed to control manufacturing equipment, chemical plants or other machinery. Typically, an industrial controller unit may run an industrial control program, such as a compiled industrial control program or ladder logic instructions, and may send control instructions to the controlled machinery in accordance with the industrial control program via an industrial control network. The industrial controller unit may also receive data from the controlled machinery via the industrial control network, such as parameters relating to process variables or measurement data pertaining to the machinery, which may be processed in the industrial controller unit and may serve as feedback for the industrial control program.

In many practically relevant applications, it is desirable that a remote user or a remote component of the industrial control environment has the possibility of accessing the industrial controller unit, such as to read data pertaining to the machinery that the industrial controller unit controls, or to modify the industrial control program. The access and communication with the industrial controller unit may be via a public network, such as the Internet. Cryptographic communication certificates are sometimes used to secure the industrial controller unit and the exchanged data against unauthorized access, such as public key certificates according to the X.509 standard. Such a certificate can be understood as an electronic document used to prove the ownership of a public key. The certificate may include information about the public key, information about the identity of its owner, and the digital signature of an entity that has verified the contents of the certificate. Provided that the signatures are valid, and the communication partner, such as the remote user or remote component trusts the issuer, the communication partner can use the public key to communicate securely with the industrial controller unit. For instance, the industrial controller unit may issue a cryptographic certificate for communication with an external website via https, a mail server, or a VPN connection.

In order to generate the certificate, or request the certificate from a certificate authority, detailed knowledge of the underlying application and communication protocol is usually required. Even small and seemingly insignificant errors in the generation or request of the certificate may lead to the certificate being rejected by the communication partner, with the consequence that a secure communication with that communication partner cannot be established. Users of an industrial controller unit oftentimes do not have this detailed cryptographic knowledge. The problem is compounded because in many applications an industrial controller unit has several different modules that each use different communication protocols and require different cryptographic certificates, and because certificates usually have a limited lifetime and need to be renewed at regular intervals. The process of obtaining certificates for an industrial controller unit is thus time-consuming and error-prone.

What is needed are improved techniques for obtaining a cryptographic certificate for an industrial controller unit that are more efficient and less failure-prone.

### Overview of the Invention

This objective is achieved with an industrial controller unit according to independent claim 1 and a method for obtaining a cryptographic certificate for an industrial controller unit according to independent claim 7. The dependent claims relate to preferred embodiments.

In a first aspect, the disclosure relates to an industrial controller unit comprising an interface for a cryptographic data exchange via a network, wherein the industrial controller unit is adapted to obtain at least one configuration parameter pertaining to the industrial controller unit and/or the interface, generate the cryptographic certificate request based on the at least one configuration parameter, and obtain a cryptographic certificate for the cryptographic data exchange based on the cryptographic certificate request.

Rather than compiling the information required to obtain a cryptographic certificate manually, the present disclosure is based on the realization that the industrial controller unit itself usually has all the required information available locally, and hence the industrial controller unit itself can generate the cryptographic certificate request based on the configuration parameters of the industrial controller unit and/or the communication interface.

For instance, the cryptographic certificate may require information pertaining to the respective module of the industrial controller unit for which the cryptographic certificate is intended, its operation parameters, and the communication protocol to be employed for the secure communication with the communication partner. This information is usually present within the industrial controller unit, and the industrial controller unit can employ this information to generate the cryptographic certificate request, either for a self-signed certificate or a certificate signing request for an external certificate authority. The disclosure thereby greatly facilitates the obtaining of cryptographic certificates, to a point where only minimal or no user interaction is required.

The disclosure is particularly useful when configuration parameters of the industrial controller unit and/or the interface change, such as due to a software update or protocol update for the industrial controller unit. The industrial controller unit may then automatically request a fresh cryptographic certificate, without additional user interaction.

According to an embodiment, the industrial controller unit is adapted to generate the cryptographic certificate request automatically and/or without requiring data input from a user.

A cryptographic data exchange, in the sense of the present disclosure, may denote any data exchange that has provisions in place to secure the data and/or the industrial controller unit against unauthorized access, such as by means of data encryption.

The data may refer to data provided from an external communication partner to the industrial controller unit via the network and the interface of the industrial controller unit, and/or to data provided from the industrial controller unit to an external communication partner via the network and the interface of the industrial controller unit.

In the context of the present disclosure, the interface may refer to any interface adapted for cryptographic data exchange.

In some examples, the interface may be realized in hardware. In other examples, the interface may be realized in software. In some instances, the interface may be realized partly in hardware and partly in software. The interface may also comprise or be associated with a communication protocol for the cryptographic data exchange via the network.

The at least one configuration parameter may refer to any parameter pertaining to an operation of the industrial controller unit and/or the interface.

The configuration parameter may be provided locally in the industrial controller unit, and the industrial controller unit may obtain the configuration parameter by reading the configuration parameter from a memory or database.

In some embodiments, the at least one configuration parameter may pertain to a hardware of the industrial controller unit and/or the interface. In other embodiments, the at least one configuration parameter may pertain to a software running on the industrial controller unit and/or the interface. In an embodiment, the at least one configuration parameter may pertain to a communication protocol employed for the cryptographic data exchange via the network.

A cryptographic certificate, in the sense of the present disclosure, may be a public key certificate or an identity certificate. A cryptographic certificate may be understood as an electronic document or set of data used to prove the ownership of the public key, such as to a communication partner. The cryptographic certificate may include information about the public key, information about the identity of its owner (generally called the subject), and a digital signature of an entity (generally called the issuer) that has verified the contents of the certificate.

In an embodiment, the industrial controller unit may be adapted to provide the cryptographic certificate to a communication partner via the interface, in particular upon request by the communication partner.

If the digital signature is valid, and the communication partner examining the certificate trusts the issuer of the certificate, then the communication partner can use the public key to communicate securely with the industrial controller unit.

In the context of the present disclosure, a cryptographic certificate request may refer to any instruction, electronic document or set of data that triggers the generation of a cryptographic certificate.

According to an embodiment, the cryptographic certificate request may comprise an identification of the industrial controller unit and/or information pertaining to the validity of the cryptographic certificate and/or a parameter pertaining to a protocol for the cryptographic data exchange via the interface.

In an embodiment, the industrial controller unit may be adapted to generate a pair of a public cryptographic key and a corresponding private cryptographic key, wherein the cryptographic certificate request comprises information pertaining to the public key.

In some examples, the cryptographic certificate request may comprise the public key.

In particular, the cryptographic certificate may bind the public cryptographic key to an identification of the industrial controller unit.

According to an embodiment, the cryptographic certificate may be a certificate according to the X.509 standard, but other standards for generating cryptographic certificates may also be employed in the context of the present disclosure.

According to an embodiment, the cryptographic certificate is a self-signed certificate, and obtaining the cryptographic certificate comprises generating the certificate by the industrial controller unit, in particular based on the cryptographic certificate request.

In an alternative embodiment, obtaining the cryptographic certificates comprises requesting a signed certificate from the certificate authority (CA) by the industrial controller unit based on the cryptographic certificate request, in particular via a server external to the industrial controller unit.

In these instances, the cryptographic certificate request may be, or may comprise a certificate signing request (CSR).

The industrial controller unit may request the signed certificate from the certificate authority automatically and/or without requiring data input from a user.

Obtaining the cryptographic certificate may further comprise receiving the signed certificate from the certificate authority by the industrial controller unit, in particular via a server external to the industrial controller unit.

According to an embodiment, the industrial controller unit is an integrated hardware unit and/or a monolithic hardware unit and/or a non-distributed hardware unit, in particular non-distributed via publicly accessible networks.

Hence, the industrial controller unit may administer the cryptographic certificates, their public and private keys centrally for all applications or functionalities of the industrial controller unit without compromising the security of these applications or functionalities.

In particular, the industrial controller unit may comprise a plurality of application modules that may require different cryptographic certificates, and the industrial controller unit may centrally administer the cryptographic certificates for all these application modules, such as in a central certificate module to which the application modules are communicatively coupled.

According to an embodiment, the industrial controller unit comprises at least one application module adapted to exchange data via the interface, and a certificate module communicatively coupled to the application module, wherein the at least one application module is adapted to obtain the at least one configuration parameter, the at least one configuration parameter pertaining to the at least one application module and/or the interface. The at least one application module may be further adapted to generate the cryptographic certificate request based on at least one configuration parameter, and to forward the cryptographic certificate request to the certificate module.

According to a further embodiment, the industrial controller unit comprises at least one application module adapted to exchange data via the interface, the at least one configuration parameter pertaining to the application module and/or the interface. The industrial controller unit may further comprise a certificate module communicatively coupled to the application module, wherein the certificate module is adapted to receive the cryptographic certificate request from the at least one application module, the cryptographic certificate request being based on at least one configuration parameter, and wherein the certificate module is adapted to send the cryptographic certificate to the at least one application module in response to the cryptographic certificate request.

An application module and a certificate module adapted to collaborate in obtaining and managing certificates are independent aspects of the present disclosure.

Hence, in a second aspect, the disclosure relates to an application module for an industrial controller unit, wherein the application module is adapted to exchange cryptographic data via an interface with a network, wherein the application module is further adapted to communicatively couple to a certificate module within the industrial controller unit, wherein the at least one application module is adapted to obtain at least one configuration parameter pertaining to the application module and/or the interface. The application module may be further adapted to generate a cryptographic certificate request based on at least one configuration parameter, and to forward the cryptographic certificate request to the certificate module.

According to an embodiment, the application module may be adapted to receive a cryptographic certificate from the certificate module, the cryptographic certificate being obtained by the certificate module in response to the cryptographic certificate request.

In a third aspect, the disclosure relates to a certificate module for an industrial controller unit, wherein the certificate module is adapted to communicatively couple to at least one application module within the industrial controller unit, wherein the application module is adapted to exchange cryptographic data via an interface with the network. The certificate module is further adapted to receive a cryptographic certificate request from the at least one application module, the cryptographic certificate request being based on at least one configuration parameter pertaining to the at least one application module and/or the interface, and wherein the certificate module is adapted to obtain a cryptographic certificate for the at least one application module in response to the cryptographic certificate request, and to send the cryptographic certificate to the at least one application module.

There are different ways in which the certificate module may obtain the cryptographic certificate.

According to an embodiment, the industrial controller unit comprises a database of cryptographic certificates, the database communicatively coupled to the certificate module, and wherein the certificate module is adapted to retrieve the cryptographic certificate from the database based on the cryptographic certificate request.

The certificate module may be communicatively coupled to the application module and/or the database via a data connection internal to the industrial controller unit, in particular a non-public data connection.

As a consequence, certificates, public and private keys may be exchanged between the certificate module and the application module and/or the database without compromising the security of the cryptographic certificate.

According to an embodiment, the certificate module is adapted to request a signed certificate from a certificate authority based on the cryptographic certificate request, in particular via a server external to the industrial controller unit.

According to an embodiment, the certificate module is adapted to generate a certificate signing request based on the cryptographic certificate request received from the at least one application module, and is further adapted to request a signed certificate from a certificate authority based on the certificate signing request, in particular via a server external to the industrial controller unit.

The certificate module may be adapted to receive the signed certificate from the certificate authority.

According to an embodiment, the certificate module is adapted to store the signed certificate pertaining to the at least one application module in a database, in particular alongside a private cryptographic key and/or a public cryptographic key pertaining to the signed certificate.

In a fourth aspect, the disclosure relates to a method for obtaining a cryptographic certificate for an industrial controller unit, the industrial controller unit comprising an interface for a cryptographic data exchange via a network. The method comprises the steps of obtaining, by the industrial controller unit, at least one configuration parameter pertaining to the industrial controller unit and/or the interface, generating, by the industrial controller unit, a cryptographic certificate request based on the at least one configuration parameter, and obtaining a cryptographic certificate for the cryptographic data exchange based on the cryptographic certificate request.

According to an embodiment, the industrial controller unit generates the cryptographic certificate request automatically and/or without requiring data input from a user.

The cryptographic certificate request may comprise an identification of the industrial controller unit and/or information pertaining to a validity period of the cryptographic certificate and/or a parameter pertaining to a protocol for the cryptographic data exchange via the interface.

In an example, the method comprises a step of generating, by the industrial controller unit, a pair of the public cryptographic key and a corresponding private cryptographic key, wherein the cryptographic certificate request comprises information pertaining to the public key.

In some examples, the cryptographic certificate request comprises the public key.

According to an embodiment, the cryptographic certificate is the self-signed certificate, and obtaining the cryptographic certificate comprises generating the certificate by the industrial controller unit.

According to an embodiment, obtaining the cryptographic certificate comprises requesting a signed certificate from a certificate authority by the industrial controller unit based on the cryptographic certificate request, in particular via a server external to the industrial controller unit.

In an example, the industrial controller unit requests the signed certificate from the certificate authority automatically and/or without requiring data input from a user.

Obtaining the cryptographic certificate may comprise receiving the signed certificate from the certificate authority by the industrial controller unit, in particular via the server external to the industrial controller unit.

According to an embodiment, the industrial controller unit comprises at least one application module adapted to exchange data via the interface, and a certificate module communicatively coupled to the application module, wherein the at least one configuration parameter pertains to the at least one application module and/or the interface.

The at least one configuration parameter may be obtained by the at least one application module.

According to the embodiment, generating comprises generating, by the at least one application module, the cryptographic certificate request based on the at least one configuration parameter.

The method may further comprise the step of forwarding, by the at least one application module, the cryptographic certificate request to the certificate module.

The certificate module may receive the cryptographic certificate request from the application module, may obtain a cryptographic certificate based on the cryptographic certificate request, and may return it to the application module.

Hence, according to an embodiment the industrial controller unit comprises at least one application module adapted to exchange data via the interface, and a certificate module communicatively coupled to the application module, wherein the at least one configuration parameter pertains to the at least one application module and/or the interface.

Obtaining the cryptographic certificate may comprise the steps of receiving, by the certificate module, the cryptographic certificate request from the at least one application module, and sending, by the certificate module, the cryptographic certificate to the at least one application module in response to the cryptographic certificate request.

The functionality of the central certificate module and a complementary requesting application module constitute independent aspects of the present disclosure.

Hence, in a fifth aspect the disclosure relates to a method for obtaining a cryptographic certificate for an industrial controller unit, industrial controller unit comprising an interface for cryptographic data exchange via the network, the industrial controller unit further comprising at least one application module adapted to exchange data via the interface, and a certificate module communicatively coupled to the application module.

The method comprising the steps of obtaining, by the at least one application module, at least one configuration parameter pertaining to the at least one application module and/or the interface, and generating, by the at least one application module, a cryptographic certificate request based on the at least one configuration parameter, and forwarding, by the at least one application module, the cryptographic certificate request to the certificate module.

In a sixth aspect, the disclosure relates to a method for obtaining a cryptographic certificate for an industrial controller unit, the industrial controller unit comprising an interface for a cryptographic data exchange via a network, the industrial controller unit further comprising at least one application module adapted to exchange data via the interface, and a certificate module communicatively coupled to the application module. The method comprises the steps of receiving, by the certificate module, a cryptographic certificate request from the at least one application module, the cryptographic certificate request based on at least one configuration parameter pertaining to the application module and/or the interface, and sending, by the certificate module, a cryptographic certificate to the at least one application module in response to the cryptographic certificate request.

In some examples, the application module and/or the certificate module may be realised in hardware. In other examples, the application module and/or the certificate module may be realised in software. In still further examples, the application module and/or the certificate module may be partly realised in hardware and partly in software.

According to an embodiment, the certificate module may be communicatively coupled to the application module via a data connection internal to the industrial controller unit, in particular via an non-public data connection.

As a consequence, certificates, public and private keys may be exchanged between the certificate module and the application module without compromising the security of the cryptographic certificate.

There are different ways in which the certificate module may obtain the cryptographic certificate for the requesting application module.

According to an embodiment, the industrial controller unit comprises a database of cryptographic certificates, the database communicatively coupled to the certificate module. The method may comprise retrieving, by the certificate module, the cryptographic certificate from the database based on the cryptographic certificate request.

Providing a database of cryptographic certificates, and retrieving the certificates from the database is particularly efficient in setups in which several application modules communicate with an external communication partner via the same communication standard and with the same communication parameters, and hence may use the same certificate.

In other embodiments, the cryptographic certificate may be a self-signed certificate, and obtaining the cryptographic certificate may comprise generating the certificate, in particular generating the certificate by the certificate module.

In still further embodiments, obtaining the cryptographic certificate may comprise requesting, by the certificate module, a signed certificate from a certificate authority based on the cryptographic certificate request.

In some examples, the certificate module may directly contact and communicate with the certificate authority.

In other examples, the certificate module may request the signed certificate from the certificate authority via a server external to the industrial controller unit, such as a central automation server administering the industrial control environment.

According to an embodiment, the method comprises the steps of generating, by the certificate module, a certificate signing request based on the cryptographic certificate request received from the at least one application module, and requesting, by the certificate module, a signed certificate from a certificate authority based on the certificate signing request, in particular via a server external to the industrial controller unit.

The cryptographic certificate request may comprise an identification of at least one application module and/or information pertaining to a validity period of the cryptographic certificate and/or a parameter pertaining to a protocol for the data exchange via the interface.

According to an embodiment, the method further comprises a step of generating, by the certificate module, a pair of the public cryptographic key and a corresponding private cryptographic key for the at least one application module, wherein the certificate signing request comprises information pertaining to the public key.

The method may further comprise a step of storing, by the certificate module, the private key and/or the public key pertaining to the application module, in particular the database.

The cryptographic certificate may bind the public cryptographic key to an identification of the at least one application module.

According to an embodiment, obtaining the cryptographic certificate may further comprise a step of receiving, by the at least one application module, the cryptographic certificate from the certificate module.

The interplay with the certificate module has been described above with reference to a single application module, for ease of presentation. However, in general an industrial controller unit may comprise a large plurality of different application modules, which may require different cryptographic certificates. Each of these application modules may request their own cryptographic certificates from the certificate module, and the certificate module may provide and manage these certificates in the same way as described above for the single application module.

Hence, according to an embodiment the industrial controller unit comprises a plurality of application modules communicatively coupled to the certificate module, in particular via data connections internal to the industrial controller unit, such as non-public data connections.

According to an embodiment, the industrial controller unit may comprise a first application module adapted to exchange cryptographic data via a first interface, a second application module different from the first application module and adapted to exchange cryptographic data via a second interface, and a certificate module communicatively coupled to the first application module and to the second application module. Obtaining the cryptographic certificate may comprise the steps of receiving, by the certificate module, a first cryptographic certificate request from the first application module, the first cryptographic certificate request being based on at least one configuration parameter pertaining to the first application module and/or the first interface; receiving, by the certificate module, a second cryptographic certificate request from the second application module, the second cryptographic certificate request based on at least one configuration parameter pertaining to the second application module and/or the second interface; sending, by the certificate module, a first cryptographic certificate to the first application module in response to the first cryptographic certificate request; and sending, by the certificate module, a second cryptographic certificate to the second application module in response to the second cryptographic certificate request, the second cryptographic certificate being different from the first cryptographic certificate.

According to an embodiment, the at least one application module and/or the certificate module is realized in hardware. In other embodiments, the at least one application module and/or the certificate module is realized in software. In still further embodiments, the at least one application module and/or the certificate module is realized partly in hardware and partly in software.

Software, in the sense of the present disclosure, may also comprise firmware.

In a seventh aspect, the disclosure relates to a computer program or to a computer program product comprising computer-readable instructions that, when read on a computer, are adapted to implement on the computer a method with some or all of the features described above.

According to an embodiment, the computer program product is a computer data storage carrier.

### Brief Description of the Drawings

The features of the industrial controller unit and method according to the present disclosure will become best apparent from the description of exemplary embodiments with reference to the accompanying drawings, in which:
- Fig. 1: is a schematic illustration of an industrial control environment in which the techniques according to the present disclosure may be employed;
- Fig. 2: is a flow diagram of a method according to an embodiment;
- Fig. 3: is a schematic illustration of an industrial controller unit according to an embodiment and its connection to a plurality of communication partners with which it may communicate using cryptographic certificates;
- Fig. 4: is a schematic illustration of an industrial controller unit comprising a plurality of application modules and a certificate module according to an embodiment;
- Fig. 5: is a flow diagram illustrating steps for obtaining a cryptographic certificate in an application module of an industrial controller unit according to an embodiment; and
- Fig. 6: is a flow diagram illustrating steps for obtaining a cryptographic certificate in a certificate module of an industrial controller unit according to an embodiment.

### Description of Embodiments

Examples of techniques for obtaining cryptographic certificates for an industrial controller unit will now be described with reference to an exemplary industrial control environment 10, 10' that involves control of a gantry crane 12 by means of industrial control software.

However, this example is merely for illustration, and in general the techniques according to the present disclosure may be employed for the industrial control of any kind of industrial process, comprising but not limited to control of industrial machinery, robots, chemical fabrication processes, or light control applications.

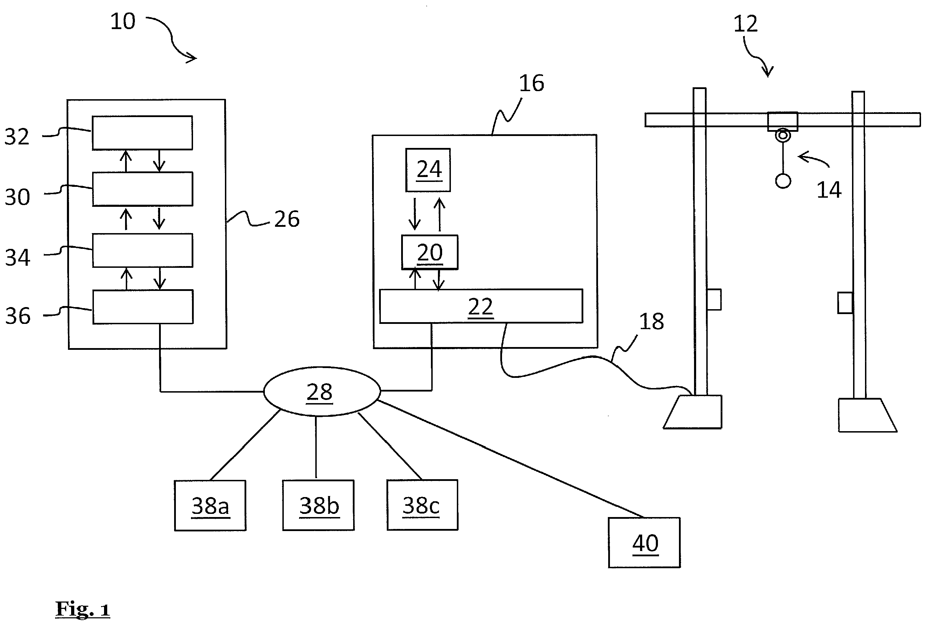

As illustrated in Figure 1, the industrial control environment 10 comprises a gantry crane 12, which maybe a crane employed in a factory environment to move heavy goods in an assembly hall by means of a movable hook assembly 14.

The industrial control environment 10 further comprises an industrial controller unit 16 that is connected to the gantry crane 12 by means of a control line 18, such as wired or wireless connection. In other examples, the industrial controller unit 16 may be integrated into the controlled machinery, such as the gantry crane 12.

The industrial controller unit 16 may comprise a processing unit 20, such as a CPU adapted to run an industrial control program, for instance in the form of a compiled program for controlling the gantry crane 12. To this end, the industrial controller unit 16 comprises a communication interface 22 that is connected to the processing unit 20 and is adapted to communicate with the gantry crane 12 via the control line 18. For instance, the processing unit 20 may provide instructions to the gantry crane 12 for the operation of actuators to move the hook assembly 14 along a pre-determined path, wherein the instructions may be provided via the communication interface 22 and the control line 18. The communication interface 22 may also receive sensor signals pertaining to an operation of the gantry crane 12 via the control line 18, and provide corresponding feedback to the processing unit 20. For instance, such sensor signals may relate to sensors indicating a position of the hook assembly 14 on the gantry crane 12, or other data relating to an operational state of the gantry crane 12.

As further illustrated in Figure 1, the industrial controller unit 16 also comprises a memory unit 24 connected to the processing unit 20. In particular, the memory unit 24 may be adapted to store industrial control programs or data structures pertaining to an operation of the industrial controller unit 16. The memory unit 24 may also store data relating to an operational state of the gantry crane 12, such as sensor data received from the gantry crane 12 via the control line 18 and communication interface 22.

The industrial control environment 10 may further comprise a programming environment 26 that is connected to the communication interface 22 via a network 28, such as a factory intranet or the Internet. For instance, the programming environment 26 may comprise a desktop PC or other computing device, and maybe employed by a programmer to design and generate industrial control software for the industrial controller unit 16, for instance in the form of a industrial control program in a high-level programming language, such as C or C++.

The programming environment 26 may comprise a programming interface 30, such as a programming editor or graphical editor that allows a programmer to generate the industrial control program in the high-level programming language. The programming environment 26 may further comprise a programming memory unit 32 and a programming processor unit 34 that are connected to the programming interface 30. The programming memory unit 32 may store functions, function blocks or variables that can be employed by the programmer when generating the industrial control program. The programming processor unit 34 may provide the processing resources to run the programming interface 30 and to generate the industrial control program.

In some examples, the programming environment 26 may additionally comprise a compiler unit 36 that is adapted to convert the industrial control program from the high-level programming language into a compiled industrial control program in machine code. The compiled industrial control program may then be provided to the industrial controller unit 16 via the network 28, may be stored in the memory unit 24 and may be run in the processing unit 20 to control operation of the gantry crane 12.

In other examples, the programming environment 26 provides the industrial control program to the industrial controller unit 16 via the network 28 in the high-level programming language, and the industrial controller unit 16 comprises a compiler unit (not shown) that compiles the high-level industrial control program into machine code.

In many applications, it may be desirable that a user can access the industrial controller unit 16 remotely, such as to allow the industrial controller unit 16 to exchange data with a remote location via the network 28. For instance, a user may want to access the industrial controller unit 16 remotely to read data stored in the memory unit 24, such as data pertaining to the industrial control program or data relating to an operation of the gantry crane 12.

In the embodiment of Figure 1, the industrial controller unit 16 may be configured to communicate with a plurality of modules 38a, 38b, 38c external to the industrial controller unit 16 via the network 28, such as an OPC UA (Unified Architecture) client 38a, a Web client 38b and a Message Queueing Telemetry Transport (MQTT) server 38c.

In many applications, there may be a wish, or even a requirement, to cryptographically safeguard the communication between the industrial controller unit 16 and the external modules 38a, 38b, 38c, and in some embodiments the same maybe true for the communication with the programming environment 26. For instance, the industrial controller unit 16 may use cryptographic certificates for that purpose, such as certificates pertaining to the X.509 standard. When establishing a communication with the industrial controller unit 16 via the network 28, a communication partner, such as one of the external modules 38a, 38b, 38c may request the industrial controller unit 16 to provide its certificate. Upon receipt of the certificate from the industrial controller unit 16, each of the external modules 38a, 38b, 38b may check the validity of the signature of the cryptographic certificate, and may then use the public key contained in the cryptographic certificate to communicate securely with the industrial controller unit 16.

However, generating and maintaining the respective cryptographic certificates is a complex task that requires detailed knowledge of the configuration of the industrial controller unit 16, the interface 22, and the communication protocol used to communicate with the external modules 38a, 38b, 38c. Different external modules 38a, 38b, 38c may communicate with the industrial controller unit 16 using different communication protocols, and hence may require different certificates. Moreover, certificates usually have a limited lifetime, and hence typically need to be renewed at regular intervals. The users of an industrial controller unit often do not have the required cryptographic background knowledge.

The techniques according to the present disclosure address these problems with an industrial controller unit 16 that may obtain the required cryptographic certificates, such as certificates pertaining to the X.509 standard, automatically depending on its configuration parameters and the operation parameters of the interface 22, possibly including parameters of the communication protocol used for communication with the respective one of the external modules 38a, 38b, 38c. Given that all the required parameters necessary for generating the cryptographic certificate usually present locally in the industrial controller unit, or may at least be requested automatically by the industrial controller unit, the user involvement can be kept to a minimum, resulting in a simpler, more effective and less failure-prone generation and management of cryptographic certificates.

For instance, when establishing communication with one of the external modules 38a, 38b, 38c via the network 28, or upon receiving a request for secure communication from one of the external modules 38a, 38b, 38c, the industrial controller unit 16 may read its configuration parameters, as well as the configuration parameters of the interface 22 and may generate a cryptographic certificate request based on these configuration parameters. The configuration parameters may be parameters that have been set by the user when initialising the industrial controller unit 16, or may be contained in a configuration file pertaining to the industrial controller unit 16. In other examples, the industrial controller unit 16 may actively request the required parameters, such as from the programming environment 26 or from a user or remote server connected to the industrial controller unit 16 via the network 28.

The cryptographic certificate request that the industrial controller unit 16 generates based on these configuration parameters may comprise an identification of the industrial controller unit 16 (the subject) and/or information pertaining to a validity period of the cryptographic certificate and/or data pertaining to the protocol for the cryptographic data exchange with the respective external module 38a, 38b, 38c.

The industrial controller unit 16 may also generate a key pair of a public key and a corresponding private key. The industrial controller unit 16 may keep the private key secret, such as stored in the memory unit 24, whereas the public key may form part of the cryptographic certificate request.

In some examples, the industrial controller unit 16 may itself generate a certificate locally (sometimes called a self-signed certificate) based on the cryptographic certificate request.

In other examples, the industrial controller unit 16 may request a signed certificate from an external certificate authority, such as a certificate authority 40 connected to the industrial controller unit 16 via the network 28.

Regardless of whether the industrial controller unit 16 obtains the cryptographic certificate by generating a self-signed certificate, or by requesting a signed certificate from the external certificate authority 40, the industrial controller unit 16 may store the obtained certificate in the memory unit 24, and upon request or by default may communicate it to the external module 38a, 38b, 38c via the network 28.

Figure 1 shows a configuration in which the industrial controller unit 16 communicates with the gantry crane 12, the programming environment 26, each of the external modules 38a, 38b, 38c and the certificate authority 40 via one and the same interface. However, this is for simplicity and ease of presentation only, and in other examples the industrial controller unit 16 may comprise a plurality of interfaces, and may employ different interfaces to communicate with one or several of these external entities.

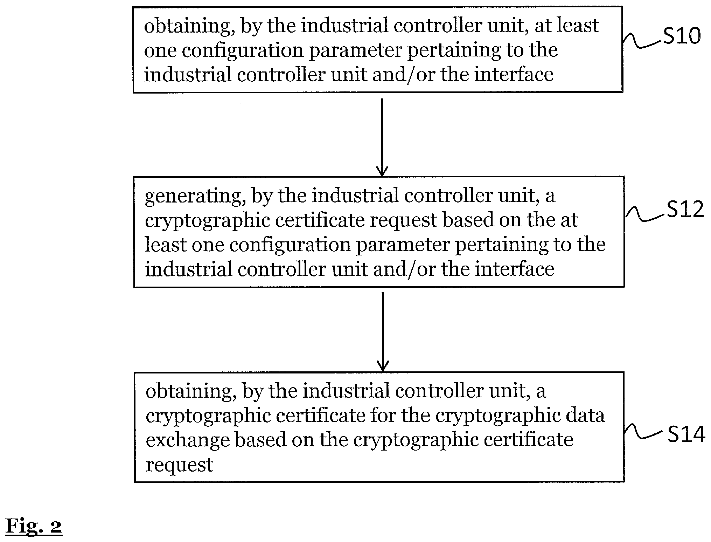

Figure 2 is a flow diagram that illustrates the steps for obtaining a cryptographic certificate for the industrial controller unit 16 according to an embodiment.

In a first step S10, the industrial controller unit obtains at least one configuration parameter pertaining to the industrial controller unit and/or the interface of the industrial controller unit.

For instance, the industrial controller unit 16 may read the at least one configuration parameter from the memory unit 24 and/or from the communication interface 22.

In a second step S12, the industrial controller unit generates a cryptographic certificate request based on the at least one configuration parameter.

In a third step S14, the industrial controller unit obtains a cryptographic certificate for the cryptographic data exchange based on the cryptographic certificate request.

For instance, the industrial controller unit 16 may self-generate the cryptographic certificate based on the cryptographic certificate request, or may request and obtain a signed certificate from an external certificate authority 40.

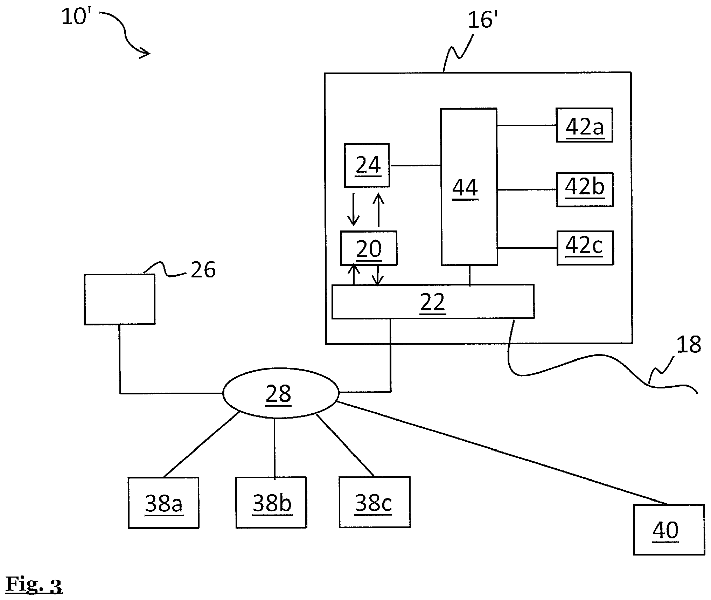

Figure 3 schematically illustrates an industrial control environment 10' and an industrial controller unit 16' in which the techniques according to the present disclosure may be employed, according to an embodiment.

The industrial control environment 10' and the industrial controller unit 16' generally correspond to the industrial control environment 10 and the industrial controller unit 16, respectively described above with reference to Figures 1 and 2, and the same reference numerals are employed to denote corresponding features. However, for ease of presentation the gantry crane 12 has been omitted from Figure 3, and the depiction of the programming environment 26 has been simplified.

The industrial controller unit 16' comprises a plurality of application modules 42a, 42b, 42c, wherein each of the application modules 42a, 42b, 42c may be adapted to communicate with a module external to the industrial controller unit 16' via the interface 22 and the network 28.

For instance, the application module 42a may be an OPC UA server module adapted to communicate with the external module 38a via the interface 22 using a first communication protocol. The application module 42b may be a Web server adapted to communicate with the external module 38b via the interface 22 using a second communication protocol different from the first communication protocol. The application module 42c may be a Message Queueing Telemetry Transport (MQTT) client adapted to communicate with the external module 38c via the interface 22 using a third communication protocol different from the first and second communication protocols. Each of the application modules 42a, 42b, 42c may require different cryptographic certificates for the respective communication with the respective external modules 38a, 38b, 38c.

Obtaining the respective cryptographic certificates may require operation parameters pertaining to the respective application module 42a, 42b, 42c, the interface 22 and the employed communication protocol. In an embodiment, each of the respective application modules 42a, 42b, 42c may automatically obtain the required operation parameters , and may use these operation parameters to generate a cryptographic certificate request and obtain a cryptographic certificate automatically and without user interaction, as described above with reference to Figures 1 and 2.

In some embodiments the respective application modules 42a, 42b, 42c may obtain the required certificates via a dedicated module of the industrial controller unit 16'.

For instance, as shown in Figure 3, the industrial controller unit 16' may comprise a certificate module 44 that is communicatively coupled to each of the application modules 42a, 42b, 42c, the interface 22 and the memory unit 24. According to an embodiment, each of the application modules 42a, 42b, 42c may obtain their certificates via the central certificate module 44.

In some embodiments, the certificate module 44 may store and manage the cryptographic certificates for each of the application modules 42a, 42b, 42c, including the respective public keys and private keys. Given that the application modules 42a, 42b, 42c and the certificate model 44 are part of the same hardware unit, namely the industrial controller unit 16', and may be communicatively coupled exclusively by means of data connections internal to the industrial controller unit 16', the respective private keys maybe effectively safeguarded.

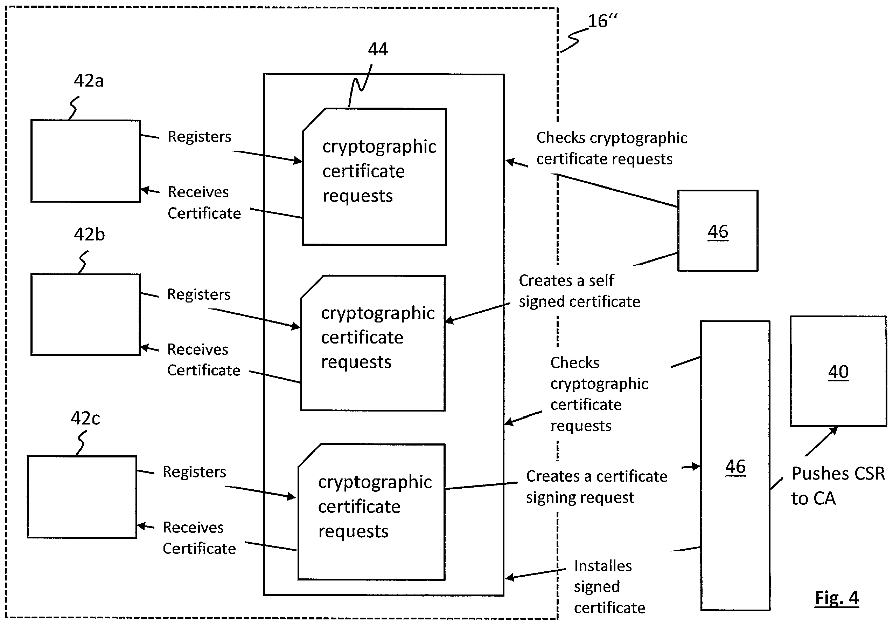

Different examples of how the certificate module 44 and the application modules 42a, 42b, 42c may collaborate in obtaining and managing cryptographic certificates will now be described in further detail with reference to Figures 4 to 6.

Figure 4 shows an industrial controller unit 16" that is generally similar to the industrial controller unit 16' described above with reference to Figure 3, and comprises a plurality of application modules 42a, 42b, 42c and a central certificate module 44 connected to the application modules 42a, 42b, 42c via an internal data connection. For ease of presentation, other components of the industrial controller unit 16" are omitted from Figure 4.

According to an embodiment, each of the application modules 42a, 42b, 42c that requires a cryptographic certificate may register with the certificate module 44 via the internal data connection. In particular, the respective application module 42a, 42b, 42c may read its configuration, such as from a configuration file, and may obtain from the configuration a plurality of configuration parameters pertaining to the respective application module 42a, 42b, 42c. Based on these configuration parameters, as well as parameters pertaining to the secure communication protocol that the respective application module 42a, 42b, 42c wants to establish, the respective application module 42a, 42b, 42c may generate a cryptographic certificate request, and submit the cryptographic certificate request to the certificate module 44. The cryptographic certificate request may have the form of a certificate template, and may comprise a set of operational parameters that is sufficient to generate a cryptographic certificate.

The certificate module 44 receives the cryptographic certificate request from the respective application module 42a, 42b, 42c, may read the cryptographic certificate request and obtain a cryptographic certificate on behalf of the respective application module 42a, 42b, 42c.

In other examples, the respective application module 42a, 42b, 42c registers with the certificate module 44, and the certificate module 44 actively queries the respective application module 42a, 42b, 42c for the operational parameters it requires to obtain a cryptographic certificate for the respective application module 42a, 42b, 42c.

There are different ways in which the certificate module may obtain the respective cryptographic certificates for the application module 42a, 42b, 42c.

In some embodiments, the industrial controller unit 16" comprises a database of cryptographic certificates, which may be stored in the memory unit 24. The certificate module 44 may check the requirements of the cryptographic certificate request that it receives from one of the application modules 42a, 42b, 42c against the characteristics of the certificates stored in the database. In case of a match, the certificate module 44 may retrieve the matching cryptographic certificate from the database, and may provide it to the requesting application module 42a, 42b, 42c.

In case the database contains several different cryptographic certificates that may be suitable for the requesting application module 42a, 42b, 42c, the certificate module 44 may select a certificate according to pre-determined criteria. For instance, the certificate should be valid at the time of the request. Certificates with stronger/longer cryptographic keys may be preferred over weaker/shorter cryptographic keys, and externally signed certificates may be preferred over self-signed certificates.

Alternatively, or in case no match is found in the database, the certificate module 44 may create a self-signed certificate based on the cryptographic certificate request. This may also comprise the generation of a pair of a public cryptographic key and a corresponding private cryptographic key on behalf of the respective application module 42a, 42b, 42c. The certificate module 44 may provide the generated self-signed certificate to the respective application module 42a, 42b, 42c.

Alternatively, the certificate module 44 may request a signed certificate from an external certificate authority (CA), such as the certificate authority 40 described above with reference to Figures 1 and 3. For instance, the certificate module 44 may generate a pair of a public cryptographic key and a corresponding private cryptographic key. The certificate module 44 may further generate a certificate signing request (CSR) based on the cryptographic certificate request received from the respective application module 42a, 42b, 42c, wherein the certificate signing request may comprise the public cryptographic key. The certificate module 44 may send the certificate signing request to the certificate authority 40, which generates the cryptographic certificate in accordance with the certificate signing request and returns it to the certificate module 44.

In some examples, the certificate module 44 may communicate with the certificate authority 40 directly, such as via the network 28. In other examples, the certificate module 44 may communicate with the certificate authority 40 via an intermediate server, such as an automation server 46 of the industrial control environment 10, 10'. The automation server 46 may administer a plurality of industrial controller units 16, 16', 16" within the industrial control environment 10, 10'.

The certificate module 44 may receive the cryptographic certificate from the certificate authority 40, either directly or via the automation server 46, and may forward it to the requesting application module 42a, 42b, 42c. The certificate module 44 may additionally store the cryptographic certificate in the database, such as in the memory unit 24.

In some examples, the certificate module 44 generates the self-signed certificate, or requests the certificate from the certificate authority 40 automatically, upon receipt of the cryptographic certificate request from the respective application module 42a, 42b, 42c. In other examples, the certificate module 44 generates the self-signed certificate, or requests the certificate from the certificate authority 40 based on an additional instruction received from a user or from the automation server 46 of the industrial control environment 10, 10'.

The certificate module 44 may have knowledge of all the application modules within the industrial controller unit 16" that require cryptographic certificates, such as the application modules 42a, 42b, 42c, as well as their operational parameters and the requirements they pose on their cryptographic certificates. The certificate module 44 may collect this information in the database, which may greatly facilitate the management and periodic renewal of the cryptographic certificates.

In case the user employs a library of required certificates, the library may likewise register with the certificate module 44, and may obtain certificates via the certificate module 44 in the same way as described above.

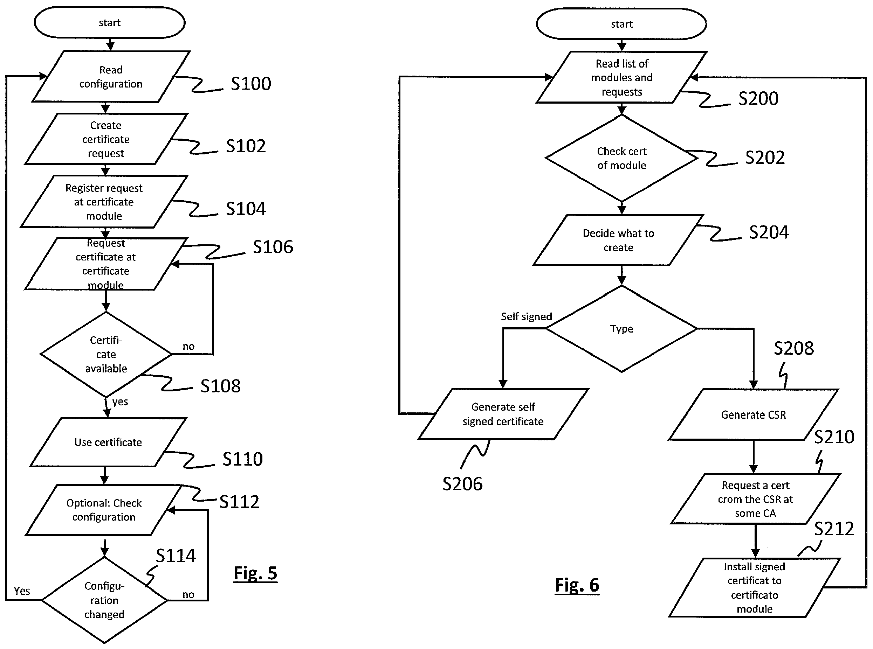

Figure 5 is a schematic illustration of a flow diagram that illustrates steps performed by an application module, such as one of the application modules 42a, 42b, 42c when requesting a certificate via a certificate module of the industrial controller unit, such as via the certificate module 44.

In a step S100, the application module reads its configuration, such as from a configuration file.

In a subsequent step S102, the application module generates a cryptographic certificate request based on at least one configuration parameter of the configuration and/or the interface, comprising the communication protocol. The application module may generate the cryptographic certificate request in the form of a certificate template that comprises information pertaining to the application module, and the at least one configuration parameter.

In a subsequent step S104, the application module registers the template at the certificate module.

In a subsequent step S106, the application module requests a cryptographic certificate from the certificate module.

Once the application module receives the cryptographic certificate from the certificate module in step S108, it may use the certificate, in step S110, for secure communication with an external module, such as one of the modules 38a, 38b, 38c.

At regular or pre-determined intervals, or upon receipt of a user instruction, the application module may check its configuration in a step S112. In case the application module determines, in a step S114, that the configuration has changed, the application module may request an updated certificate, making use of the mechanism described above.

Figure 6 is a flow diagram schematically illustrating steps performed by a certificate module, such as the certificate module 44, when receiving a cryptographic certificate request from an application module of the industrial controller unit, such as from one of the application modules 42a, 42b, 42c.

In a step S200, the certificate module reads a list of application modules and cryptographic certificate requests received from the application modules, such as in the form of certificate templates.

In a subsequent step S202, the certificate module may check whether a suitable cryptographic certificate that matches the cryptographic certificate request is available from its database, and if so may forward the respective cryptographic certificate to the requesting application module.

If the database does not comprise a suitable cryptographic certificate, the certificate module may decide, in a subsequent step S204, whether a self-signed certificate shall be created, or whether to generate a certificate signing request (CSR) for obtaining a cryptographic certificate from an external certificate authority (CA). For instance, the decision maybe made based on the cryptographic certificate request received from the respective application module, in particular based on the communication protocol that should be employed for the secure data exchange.

In case a self-signed certificate shall be provided, the certificate module generates the self-signed certificate in step S206 based on the cryptographic certificate request, and forwards it to the requesting application module. Generating the cryptographic certificate may also comprise generating a pair of a public cryptographic key and the corresponding private cryptographic key, wherein the public cryptographic key may be incorporated in the cryptographic certificate.

Alternatively, in case the cryptographic certificate shall be provided by an external certificate authority, the certificate module generates a certificate signing request based on the cryptographic certificate request in step S208. Generating the certificate signing request may also comprise generating a pair of a public cryptographic key and the corresponding private cryptographic key, wherein the public cryptographic key may be incorporated in the certificate signing request.

The certificate module requests the cryptographic certificate based on the certificate signing request at an external certificate authority in a subsequent step S210.

In a subsequent step S212, the certificate module receives the cryptographic certificate from the certificate authority, and may store it in the database and forward it to the requesting application module.

The techniques of the present disclosure have several important advantages over the state-of-the-art, comprising:
1. The user of the industrial controller unit does not need to have any expert knowledge in cryptography or the generation of certificates. Rather, the generation of certificates, certificate signing requests and corresponding keys can be performed automatically by the industrial controller unit.
2. The industrial controller unit automatically obtains the cryptographic certificate based on its operational parameters, which the industrial controller unit may have available locally or may request automatically. The operational parameters as well as parameters pertaining to the communication protocol may not need to be known to the user of the industrial controller unit.
3. Cryptographic certificates for a plurality of application modules of an industrial controller unit may be administered centrally, such as in a certificate module. It therefore becomes easier to detect when certificates are missing or outdated, and to obtain or replace these certificates.
4. Private keys may be generated on a monolithic hardware unique of the industrial controller unit, and may not need to leave this hardware unit, thereby enhancing the security.

The examples and the figures merely serve to illustrate the method and the system according to the disclosure, but should not be understood to imply any limitation. The scope of the disclosure is to be determined by means of the appended claims.

### Reference Signs

- 10, 10': industrial control environment
- 12: gantry crane
- 14: hook assembly of gantry crane 12
- 16, 16', 16": industrial controller unit
- 18: control line
- 20: processing unit
- 22: communication interface
- 24: memory unit
- 26: programming environment
- 28: network
- 30: programming interface
- 32: programming memory unit
- 34: programming processor unit
- 36: compiler unit
- 38a, 38b, 38c: external modules
- 40: certificate authority
- 42a, 42b, 42c: application modules of the industrial controller unit 16'
- 44: certificate module
- 46: automation server

## Claims

1. An industrial controller unit (16, 16', 16") comprising an interface (22) for a cryptographic data exchange via a network (28);
the industrial controller unit (16, 16', 16") being adapted to obtain at least one configuration parameter pertaining to the industrial controller unit (16, 16', 16") and/or the interface (22);
the industrial controller unit (16, 16', 16") being adapted to generate a cryptographic certificate request based on the at least one configuration parameter; and
the industrial controller unit (16, 16', 16") being further adapted to obtain a cryptographic certificate for the cryptographic data exchange based on the cryptographic certificate request.

2. The industrial controller unit (16, 16', 16") according to claim 1, comprising:
at least one application module (42a, 42b, 42c) adapted to exchange data via the interface (22); and
a certificate module (44) communicatively coupled to the at least one application module (42a, 42b, 42c);
wherein the at least one application module (42a, 42b, 42c) is adapted to obtain the at least one configuration parameter, the at least one configuration parameter pertaining to the application module (42a, 42b, 42c) and/or the interface (22);
wherein the at least one application module (42a, 42b, 42c) is adapted to generate the cryptographic certificate request based on the at least one configuration parameter; and
wherein the at least one application module (42a, 42b, 42c) is adapted to forward the cryptographic certificate request to the certificate module (44).

3. The industrial controller unit (16, 16', 16") according to any of the preceding claims, comprising:
at least one application module (42a, 42b, 42c) adapted to exchange data via the interface (22), the at least one configuration parameter pertaining to the application module (42a, 42b, 42c) and/or the interface (22); and
a certificate module (44) communicatively coupled to the application module (42a, 42b, 42c);
wherein the certificate module (44) is adapted to receive the cryptographic certificate request from the at least one application module (42a, 42b, 42c), the cryptographic certificate request being based on at least one configuration parameter; and
wherein the certificate module (44) is adapted to send the cryptographic certificate to the at least one application module (42a, 42b, 42c) in response to the cryptographic certificate request.

4. The industrial controller unit (16, 16', 16") according to claim 2 or 3, wherein the industrial controller unit (16, 16', 16") comprises a database (24) of cryptographic certificates, the database (24) communicatively coupled to the certificate module (44), and wherein the certificate module (44) is adapted to retrieve the cryptographic certificate from the database (24) based on the cryptographic certificate request.

5. The industrial controller unit (16, 16', 16") according to any of the claims 2 to 4, wherein the certificate module (44) is adapted to request a signed certificate from a certificate authority (40) based on the cryptographic certificate request, in particular via a server (46) external to the industrial controller unit (16, 16', 16").

6. The industrial controller unit (16, 16', 16") according to claim 5, wherein the certificate module (44) is adapted to store the signed certificate pertaining to the at least one application module (42a, 42b, 42c) in a database (24), in particular alongside a private cryptographic key and/or a public cryptographic key pertaining to the signed certificate.

7. A method for obtaining a cryptographic certificate for an industrial controller unit (16, 16', 16"), the industrial controller unit (16, 16', 16") comprising an interface (22) for a cryptographic data exchange via a network (28), the method comprising:
obtaining, by the industrial controller unit (16, 16', 16"), at least one configuration parameter pertaining to the industrial controller unit (16, 16', 16") and/or the interface (22);
generating, by the industrial controller unit (16, 16', 16"), a cryptographic certificate request based on the at least one configuration parameter; and
obtaining, by the industrial controller unit (16, 16', 16"), a cryptographic certificate for the cryptographic data exchange based on the cryptographic certificate request.

8. The method according to claim 7, wherein the industrial controller unit (16, 16', 16") generates the cryptographic certificate request automatically and/or without requiring data input from a user.

9. The method according to claim 7 or 8, wherein the cryptographic certificate is a self-signed certificate, and obtaining the cryptographic certificate comprises generating the certificate by the industrial controller unit (16, 16', 16").

10. The method according to claim 7 or 8, wherein obtaining the cryptographic certificate comprises requesting a signed certificate from a certificate authority (40) by the industrial controller unit (16, 16', 16") based on the cryptographic certificate request, in particular via a server (46) external to the industrial controller unit (16, 16', 16").

11. The method according to any of the claims 7 to 10, wherein the industrial controller unit (16, 16', 16") comprises at least one application module (42a, 42b, 42c) adapted to exchange data via the interface (22), and a certificate module (44) communicatively coupled to the at least one application module (42a, 42b, 42c), wherein the at least one configuration parameter pertains to the at least one application module (42a, 42b, 42c) and/or the interface (22), wherein:
obtaining the at least one configuration parameter comprises obtaining the at least one configuration parameter by the at least one application module (42a, 42b, 42c);
generating comprises, by the at least one application module (42a, 42b, 42c), generating the cryptographic certificate request based on the at least one configuration parameter; and
forwarding, by the at least one application module (42a, 42b, 42c), the cryptographic certificate request to the certificate module (44).

12. The method according to any of the claims 7 to 11, wherein the industrial controller unit (16, 16', 16") comprises at least one application module (42a, 42b, 42c) adapted to exchange data via the interface (22), and a certificate module (44) communicatively coupled to the at least one application module (42a, 42b, 42c), wherein the at least one configuration parameter pertains to the at least one application module (42a, 42b, 42c) and/or the interface (22), wherein obtaining the cryptographic certificate comprises:
receiving, by the certificate module (44), the cryptographic certificate request from the at least one application module (42a, 42b, 42c); and
sending, by the certificate module (44), the cryptographic certificate to the at least one application module (42a, 42b, 42c) in response to the cryptographic certificate request.

13. The method according to claim 11 or 12, wherein the industrial controller unit (16, 16', 16") comprises a database (24) of cryptographic certificates, the database (24) communicatively coupled to the certificate module (44), the method further comprising:
retrieving, by the certificate module (44), the cryptographic certificate from the database (24) based on the cryptographic certificate request.

14. The method according to any of the claims 11 to 13, wherein obtaining the cryptographic certificate comprises requesting, by the certificate module (44), a signed certificate from a certificate authority (40) based on the cryptographic certificate request, in particular via a server (46) external to the industrial controller unit (16, 16', 16").

15. A computer program comprising computer-readable instructions that, when read on a computer, are adapted to cause a method according to any of the claims 7 to 14.
